# FASCICULE DE BREVET EUROPEEN

(11) **EP 2 392 940 B1**
(45) Date de publication et mention de la délivrance du brevet: **01.01.2020**
(21) Numéro de dépôt: 11167878.5
(22) Date de dépôt: 27.05.2011
(51) Int. Cl.: G01S 5/10, G01S 13/87

(54) **Système de positionnement d'un satellite géostationnaire**
Positioniersystem eines geostationären Satelliten
System for positioning a geostationary satellite

(30) Priorité: 01.06.2010 FR 1002309
(43) Date de publication de la demande: 07.12.2011
(73) Titulaire: THALES, 92400 Courbevoie (FR)
(72) Inventeur: Celerier, Bruno, 06810 Auribeau sur Siagne (FR)
(74) Mandataire: Henriot, Marie-Pierre

(56) Documents cités:
- EP-A2- 2 148 214
- WO-A1-03/100455
- US-A- 5 717 404
- US-A1- 2004 140 930
- US-A1- 2006 227 043
- US-B1- 6 229 477

## Description

Le domaine de l'invention est celui de la détermination de la position d'un satellite géostationnaire.

Il est connu de déterminer la position d'un satellite géostationnaire en utilisant un système comportant une station dédiée de mesure de distance entre cette station et le satellite, telle qu'une grande station TCR (acronyme de l'expression anglo-saxonne Telemetry Command and Ranging) émettrice et réceptrice, de position connue et un transpondeur spécifique à bord du satellite, inclus dans le sous-système TCR. L'orbite du satellite est déterminée à partir de plusieurs datations du trajet aller-retour entre la station et le satellite. Ces mesures du temps de propagation sont parfois vérifiées ou complétées par des mesures de l'azimut et de l'élévation du signal reçu par la station.

Un des inconvénients de ce système est que la station émettrice et réceptrice nécessite de grandes antennes mobiles, chères à l'acquisition et en maintenance, difficiles à rendre robustes du fait de l'utilisation de pièces mobiles et motorisées. Ceci a pour conséquence fâcheuse que la chaîne de contrôle d'orbite peut devenir indisponible ainsi donc que les fonctions normalement assurées telles que la mesure de distance, le calcul de manœuvres et autres opérations.

Un autre système de positionnement d'un satellite décrit dans le brevet US 6 229 477 utilise une station émettrice et réceptrice dite station primaire et au moins une autre station réceptrice et émettrice dite station secondaire. La station primaire envoie un signal de mesure au satellite qui le renvoie à la station primaire et aux stations secondaires. Les stations secondaires renvoient alors à la station primaire via le satellite, des signaux de codes de réponse. La station primaire détermine la position du satellite en fonction :
- d'une part du temps de propagation station primaire-satellite à partir du temps d'arrivée du signal de mesure et
- d'autre part du décalage de fréquence Doppler établi à partir de la différence de fréquence porteuse entre le code de mesure envoyé et le code de réponse reçu des stations secondaires.

Ce système basé notamment sur des mesures de trajets, nécessite que la station primaire soit équipée d'une horloge locale et que l'instant de départ du signal de mesure soit enregistré. La position obtenue est alors entachée d'erreurs dues aux délais de transmission du satellite et aux délais de répétition des stations secondaires.

Le brevet US 5 717 404 décrit un système pour déterminer l'orbite d'un satellite à partir de mesures de durées de propagation ensuite exploitées en termes de distances équivalentes satellite-émetteur. Ce système nécessite que la station primaire soit équipée d'une horloge locale et que l'instant de départ du signal de mesure soit enregistré.

Un autre système de positionnement d'un satellite décrit dans le brevet US 7 512 505 utilise :
- une station émettrice d'un signal à destination du satellite et réceptrice du signal correspondant renvoyé par le satellite, et
- plusieurs autres stations réceptrices du signal descendant renvoyé par le satellite.

Ce système basé sur des mesures de temps d'arrivée nécessite d'une part que chaque station réceptrice soit équipée d'une horloge locale et que celles-ci soient synchronisées entre elles et nécessite d'autre part un réseau de collecte des mesures effectuées par les stations réceptrices et destinées à un centre de calcul.

On peut également citer le brevet EP 2 148 214 qui présente un système comportant plusieurs stations réceptrices d'un signal envoyé par le satellite et une station de collecte et de traitement des données envoyées par les stations réceptrices. Chaque station réceptrice enregistre pendant une fenêtre temporelle déterminée les signaux transmis par le satellite et envoie à la station de traitement les données représentant les signaux reçus pendant ladite fenêtre temporelle. La fenêtre temporelle associée à chaque station est décalée et/ou de taille différente d'une station à l'autre.

Comme dans le cas précédent, ce système basé sur des mesures de temps d'arrivée nécessite d'une part que les stations réceptrices soient synchronisées entre elles pour déterminer les fenêtres temporelles et nécessite d'autre part un réseau de collecte des mesures effectuées par les stations réceptrices et destinées à la station de traitement.

Le but de l'invention est de disposer d'un système fiable, aussi performant, et moins onéreux que les solutions actuelles pour déterminer la position des satellites.

La solution consiste à utiliser la technique bien connue de multilatération, aussi connue sous le nom de TDOA acronyme de l'expression anglo-saxonne «Time Différences Of Arrivai », en association avec un système tel que toutes les mesures soient effectuées en un seul et même endroit, à bord du satellite, se dispensant ainsi de tout système de collection des données en un même endroit.

Elle est ainsi compatible de stations sol à bas coût, voire de la réutilisation de moyens sols dédiés à chaque satellite, tels que les antennes d'émission depuis le sol existantes, et « montant » vers le satellite des contenus à diffuser par lui.

Plus précisément l'invention a pour objet un système de positionnement d'un satellite géostationnaire selon la revendication 1.

Dans ce cas, aucune synchronisation des signaux montants n'est nécessaire. Il n'est donc pas nécessaire dans ce mode de réalisation que les stations sol soient équipées de moyens de synchronisation entre elles.

Le satellite comprend par exemple des moyens pour générer le signal descendant.

Selon une variante, le signal descendant envoyé par le satellite est émis par une station sol d'émission et répété par le satellite, le satellite comprenant des moyens de répétition du signal reçu de la station sol d'émission. Cette station sol d'émission peut être une des stations de répétition.

Selon une caractéristique de l'invention, les signaux montants sont de même fréquence, et décalés dans le temps d'un délai connu, le décalage étant réalisé soit par les stations sol d'émission, soit par les stations sol de répétition.

D'autres caractéristiques et avantages de l'invention apparaîtront à la lecture de la description détaillée qui suit, faite à titre d'exemple non limitatif et en référence aux dessins annexés dans lesquels :

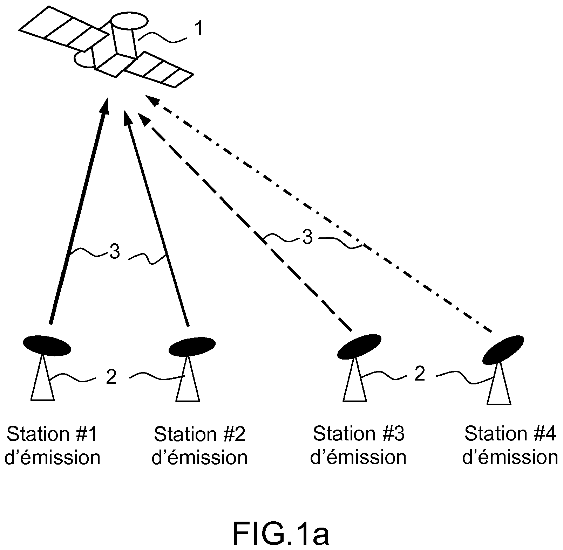

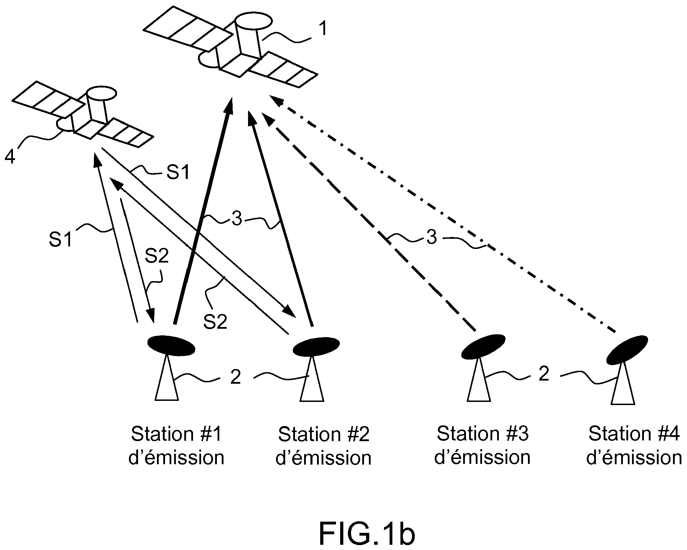

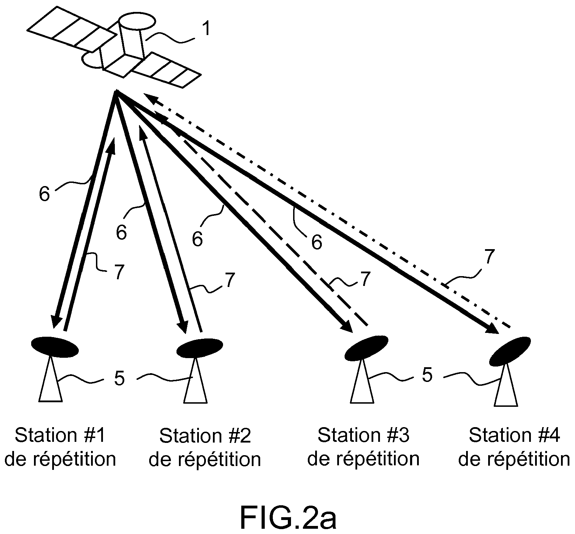

la figure 2a représente schématiquement un exemple de système de localisation d'un satellite selon l'invention, avec des stations sol qui sont des stations de répétition d'un signal descendant généré par le satellite à localiser,

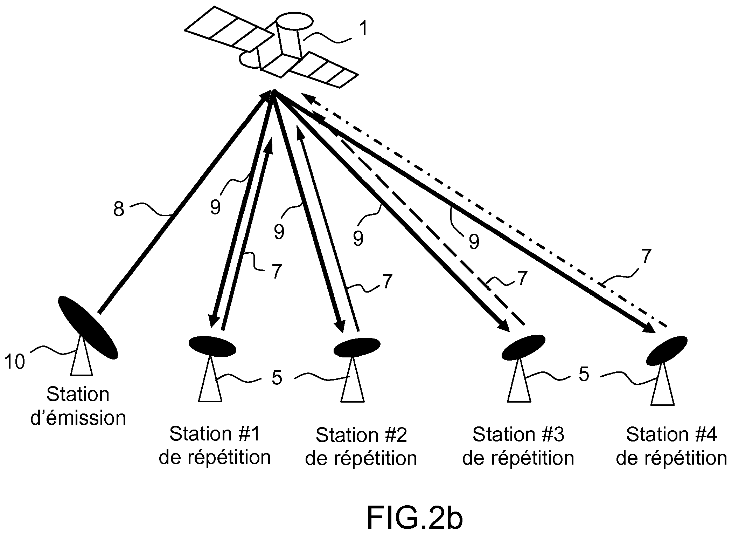

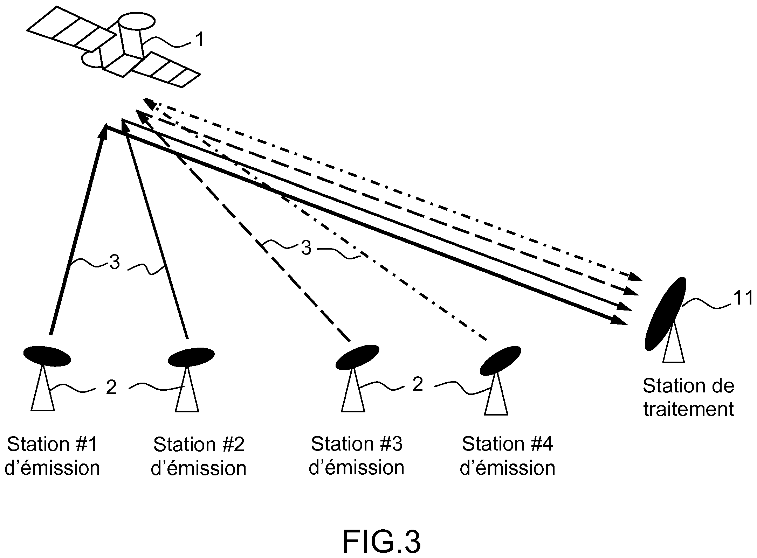

la figure 2b représente schématiquement un exemple de système de localisation d'un satellite selon l'invention, avec des stations sol qui sont des stations de répétition d'un signal descendant répété par le satellite à localiser, et provenant d'une station sol émettrice,

D'une figure à l'autre, les mêmes éléments sont repérés par les mêmes références.

L'invention consiste à déterminer la position d'un satellite géostationnaire :
- en exploitant le principe de la multilatération, aussi nommée TDOA pour « Time Différences Of Arrival »
- en utilisant les capacités d'émission ou de répétition de signaux, propres à cette catégorie de satellites, c'est-à-dire une antenne de réception, un répéteur (organe électronique mettant à disposition l'information du signal de réception à disposition sur un autre signal porteur, apte à être réémis), et une antenne de réémission qui physiquement peut être l'antenne de réception,
- et en mesurant les différences de temps d'arrivée des signaux dues aux différences de trajet des signaux :
   - station sol vers satellite, ou
   - satellite → station sol → satellite, auquel cas les différences de temps d'arrivée sont doublées,
   la mesure étant effectuée :
   - soit à bord du satellite,
   - soit au sol, après renvoi des signaux par le satellite vers le sol.

Les signaux montants impliqués dans ces mesures, ne comportent aucune autre information que leur propre existence, ou s'ils en comportent parce que basés sur des signaux existants, cette information n'est ni utile ni exploitée pour déterminer la position du satellite.

On va à présent détailler les différents modes de réalisation.

Le système de base comprend :
- au moins quatre stations sol chacune étant de position connue et apte à envoyer vers le satellite un signal dit signal montant,
- et des moyens de mesure des différences des temps d'arrivée au satellite des signaux montants.

La solution répond au besoin en apportant une solution économique et aisée à fiabiliser :
- les stations sol bas coût peuvent être disposées en nombre suffisant (au moins quatre, qui est le minimum au sens mathématique pour l'usage de la multilatération) pour que le système reste opérationnel y compris en cas d'indisponibilité d'une station, pour un aléa mineur aussi bien que majeur (sismique ou climatique par exemple),
- les stations d'émission et de réception peuvent réutiliser diverses structures existantes, typiquement pour la « montée » des signaux de télécommunications à diffuser, qui existent généralement déjà en plusieurs lieux de la couverture.

La différence des temps d'arrivée est mesurée à bord au moyen d'un matériel spécifique installé à bord du satellite.

Ce peut être par exemple par le biais d'amplificateurs logarithmiques bien connus dans cette utilisation et décrits par exemple dans la publication « Detecting Fast RF Bursts using Log Amps » by Yuping Toh (Analog Dialogue 36-05 (2002)), suivis d'un comparateur de tensions électriques dont le changement d'état déclenche le lancement ou la mémorisation de l'avancement d'un oscillateur, à même de mettre à disposition le temps écoulé entre deux « bursts » successifs via la connaissance de la période de l'oscillateur.

Une autre solution, plus élégante, plus précise, plus complexe, mais très bien connue de l'homme de l'art, est d'utiliser les avantages de l'étalement de spectre, comme le CDMA acronyme de l'expression anglo-saxonne Code Division Multiple Access pour la génération du signal, avec par exemple la technique « early-late » pour la détermination de son instant d'arrivée. Cette différence de TOA est sous la forme d'un nombre de périodes de durée connue, disponible dans un registre mémoire.

Cette solution offre la possibilité de réaliser la détermination d'orbite à bord, ainsi que la programmation et l'exécution des manœuvres de maintien à poste de manière autonome. De plus, aucun système de collection des données n'est nécessaire : les différences de temps d'arrivée sont mesurées en un même point.

Selon un mode de réalisation dont des exemples sont montrés figures 2a et 2b, les stations sol sont des stations de répétition 5, chaque signal montant 7 étant la répétition par cette station du signal descendant 6 envoyé par le satellite. Ce signal descendant 6 est par exemple de la forme « burst » et à des fréquences différentes ou identiques. Ce signal 3 est par exemple de la forme "burst", un signal « burst » étant un signal sinusoïdal de durée limitée à une fenêtre temporelle. Il peut également s'agir par exemple d'un signal de télémétrie des variables d'état du satellite (températures, tensions électriques, mesures d'attitude, ...) ou un signal de charge utile (données, et/ou audio, et/ou vidéo).

Ces stations sol peuvent aussi émettre un signal montant éventuellement différent du signal descendant mais synchronisé sur la réception de ce signal descendant (début, fin, détection d'un mot clé, ...). On entend ici par « synchronisé » le fait que le retard entre la réception du signal 6 et l'émission du signal 7 est constant au fil des émissions successives, et de durée identique entre les stations, ou de durées connues pour chaque station (ne serait ce que par mesure) pour prise en compte dans le calcul des différences de temps d'arrivée.

Aucune synchronisation des signaux montants 7 entre eux n'est nécessaire ; il n'est donc pas nécessaire que les stations sol 5 soient équipées de moyens de synchronisation entre elles. La même fréquence peut être utilisée par chaque station puisque les temps d'arrivée sont différents. On pourra cependant, si nécessaire pour la mise en œuvre électronique, augmenter les écarts de réception des différents signaux 7 par le satellite en apportant un retard connu (prédéterminé et/ou mesuré plus précisément au fil de l'usage) et différent d'une station à l'autre au moment de la répétition par les stations du même nom. Comme pour le mode de réalisation précédent, la différence des temps d'arrivée est mesurée à bord au moyen d'un matériel spécifique installé à bord du satellite. A cause du trajet aller-retour, ces différences sont doubles de celles du premier mode de réalisation. Cette différence de TOA est de la forme numérique, identique à celle décrite dans la première réalisation, ou différente, analogique par exemple.

Cette solution offre les mêmes avantages :
- possibilité de réaliser la détermination d'orbite à bord, ainsi que la programmation et l'exécution des manœuvres de maintien à poste de manière autonome,
- aucun système de collection des données n'est nécessaire puisque les différences de temps d'arrivée sont mesurées en un même point.

De plus cette solution présente un avantage supplémentaire : la station sol 5 est moins coûteuse et plus fiable, un équipement de répétition étant moins onéreux qu'un équipement d'émission muni de moyens de synchronisation, et n'est pas sujet à une éventuelle panne du système de synchronisation

Le signal descendant envoyé par le satellite peut être généré à bord du satellite comme dans l'exemple illustré figure 2a. Le satellite est alors équipé de moyens d'émission d'un signal, par exemple similaire à celui qui existe pour l'envoi au sol des télémesures des états du satellite.

Selon une variante illustrée figure 2b, le signal descendant 9 provient lui-même d'un signal 8 émis par une station sol émettrice 10, qui est répété par le satellite 1. Le satellite est alors équipé d'un répéteur compatible de la fréquence ou bande de fréquence et du niveau du signal à répéter. Les signaux 8 et 9 sont par exemple de la forme « burst » également.

Selon un mode de réalisation particulier, l'une des stations sol de répétition 5 est complétée pour assurer cette fonction de station émettrice.

Dans les exemples présentés jusque-là, la différence des temps d'arrivée est mesurée au moyen d'un matériel spécifique installé à bord du satellite 1.

Le satellite géostationnaire 1 à localiser est par exemple un satellite de télécommunications ou un satellite d'observation ou météorologique.

## Revendications

1. Système de positionnement d'un satellite géostationnaire (1), **caractérisé en ce qu'**il comprend :
- ledit satellite géostationnaire,
- au moins quatre stations sol chacune étant de position connue et apte à envoyer vers le satellite géostationnaire (1) un signal dit signal montant, les stations sol étant des stations de répétition (5), chaque signal montant (7) étant la répétition d'un signal descendant envoyé par le satellite (1),
- et **en ce que** le satellite (1) comprend des moyens configurés pour réaliser la détermination de l'orbite à bord du satellite géostationnaire à partir de mesures des différences des temps d'arrivée au satellite des signaux montants.

2. Système de positionnement d'un satellite géostationnaire selon la revendication précédente, **caractérisé en ce que** le satellite (1) comprend des moyens pour générer le signal descendant (6).

3. Système de positionnement d'un satellite géostationnaire selon la revendication 2, **caractérisé en ce que** le signal descendant envoyé par le satellite (1) est émis par une station sol d'émission (10) et répété par le satellite (1), le satellite comprenant des moyens de répétition du signal (8) reçu de la station sol d'émission.

4. Système de positionnement d'un satellite géostationnaire selon la revendication précédente, **caractérisé en ce que** la station sol d'émission (10) est une des stations de répétition (5).

5. Système de positionnement d'un satellite géostationnaire selon l'une des revendications 1 à 4, **caractérisé en ce que** les signaux sont de même fréquence, et décalés dans le temps d'un délai connu.

## Patentansprüche

1. Positioniersystem eines geostationären Satelliten (1), **dadurch gekennzeichnet, dass** es Folgendes beinhaltet:
- den geostationären Satelliten,
- mindestens vier Bodenstationen jeweils bekannter Position und welche in der Lage sind, an den geostationären Satelliten (1) ein Uplinksignal genanntes Signal zu senden, wobei die Bodenstationen Wiederholungsstationen (5) sind, wobei jedes Uplinksignal (7) die Wiederholung eines Downlinksignals ist, welches von dem Satelliten (1) gesendet wird,
- und dadurch, dass der Satellit (1) Mittel beinhaltet, welche konfiguriert sind, um die Bestimmung der Umlaufbahn an Bord des geostationären Satelliten anhand von Messungen der Ankunftszeit-Differenzen der Uplinksignale beim Satelliten zu bewerkstelligen.

2. Positioniersystem eines geostationären Satelliten nach dem vorhergehenden Anspruch, **dadurch gekennzeichnet, dass** der Satellit (1) Mittel zum Erzeugen des Downlinksignals (6) beinhaltet.

3. Positioniersystem eines geostationären Satelliten nach Anspruch 2, **dadurch gekennzeichnet, dass** das vom Satelliten (1) gesendete Downlinksignal durch eine Boden-Sendestation (10) gesendet und durch den Satelliten (1) wiederholt wird, wobei der Satellit Mittel zum Wiederholen des von der Boden-Sendestation empfangenen Signals (8) beinhaltet.

4. Positioniersystem eines geostationären Satelliten nach dem vorhergehenden Anspruch, **dadurch gekennzeichnet, dass** die Boden-Sendestation (10) eine der Wiederholungsstationen (5) ist.

5. Positioniersystem eines geostationären Satelliten nach einem der Ansprüche 1 bis 4, **dadurch gekennzeichnet, dass** die Signale gleicher Frequenz sind und zeitlich um eine bekannte Frist versetzt sind.

## Claims

1. System for positioning a geostationary satellite (1), **characterized in that** it comprises:
- said geostationary satellite,
- at least four earth stations each being in a known position and capable of sending to the satellite (1) a signal called an uplink signal, the earth stations being repeater stations (5), each uplink signal (7) being the repeat of a downlink signal sent by the satellite (1),
- and **in that** the satellite (1) comprises means configured to determine the orbit on board the geostationary satellite based on measurements of time differences of arrival at the satellite of the uplink signals.

2. System for positioning a geostationary satellite according to the preceding claim, **characterized in that** the satellite (1) comprises means for generating the downlink signal (6).

3. System for positioning a geostationary satellite according to Claim 2, **characterized in that** the downlink signal sent by the satellite (1) is transmitted by a transmitter earth station (10) and repeated by the satellite (1), the satellite comprising means for repeating the signal (8) received from the transmitter earth station.

4. System for positioning a geostationary satellite according to the preceding claim, **characterized in that** the transmitter earth station (10) is one of the repeater stations (5).

5. System for positioning a geostationary satellite according to one of Claims 1 to 4, **characterized in that** the signals are of the same frequency and shifted in time by a known delay.
